# EUROPEAN PATENT APPLICATION

(11) **EP 4 633 046 A1**
(43) Date of publication of application: **15.10.2025**
(21) Application number: 25168377.7
(22) Date of filing: 03.04.2025
(51) Int. Cl.: H04B 5/77

(54) **ASSISTING NODE-BASED HYBRID AMBIENT INTERNET OF THINGS DEVICE COMMUNICATION**

(30) Priority: 08.04.2024 GB 202404957
(71) Applicant: Nokia Technologies Oy, 02610 Espoo (FI)
(72) Inventor: BUTT, Muhammad Majid, Naperville, 60565 (US)
(74) Representative: Script Intellectual Property LLP

(57) **Abstract**

Assisting node-based hybrid ambient Internet of Things device communication is provided. A method for assisting node-based hybrid ambient Internet of Things device communication may include indicating to a network entity that an energy harvesting device supports a first transmission mode and a second transmission mode. The method may also include operating in the first transmission mode as a default mode in which an activation signal is received from an intermediate node and switching, upon a first switching condition being satisfied, from the first transmission mode to operate in the second transmission mode.

## Description

### TECHNICAL FIELD:

Some example embodiments may generally relate to mobile or wireless telecommunication systems, such as Long Term Evolution (LTE) or fifth generation (5G) new radio (NR) access technology, or 5G beyond, or sixth generation (6G) access technology or other communications systems. For example, certain example embodiments may relate to assisting node-based hybrid ambient internet of things device communication.

### BACKGROUND:

Examples of mobile or wireless telecommunication systems may include the Universal Mobile Telecommunications System (UMTS) Terrestrial Radio Access Network (UTRAN), Long Term Evolution (LTE) Evolved UTRAN (E-UTRAN), LTE-Advanced (LTE-A), MulteFire, LTE-A Pro, fifth generation (5G) radio access technology or new radio (NR) access technology and/or sixth generation (6G) radio access technology. Fifth generation (5G) and sixth generation (6G) wireless systems refer to the next generation (NG) of radio systems and network architecture. 5G network technology is mostly based on new radio (NR) technology, but the 5G network can also build on E-UTRAN radio. It is estimated that NR may provide bitrates on the order of 10-20 Gbit/s or higher, and may support at least enhanced mobile broadband (eMBB) and ultra-reliable low-latency communication (URLLC) as well as massive machine-type communication (mMTC). NR is expected to deliver extreme broadband and ultra-robust, low-latency connectivity and massive networking to support the Internet of Things (IoT).

### SUMMARY:

Various example embodiments may provide at least one processor and at least one memory storing instructions that, when executed by the at least one processor, cause the apparatus at least to indicate to a network entity that the apparatus supports a first transmission mode and a second transmission mode. In the first transmission mode, transmitting data may include modulating the data on a backscattered signal, and in the second transmission mode, transmitting data may include actively generating and transmitting a signal on which the data is modulated. The apparatus may also be caused to configure at least one of a timer or an energy threshold for mode switching between the first transmission mode and the second transmission mode, operate in the first transmission mode as a default mode in which an activation signal is received from an intermediate node, and switch, upon a first switching condition being satisfied, from the first transmission mode to operate in the second transmission mode.

Certain example embodiments may provide at least one processor and at least one memory storing instructions that, when executed by the at least one processor, cause the apparatus at least to receive, from an energy harvesting device, an indication that the energy harvesting device supports a first transmission mode and a second transmission mode. In the first transmission mode, transmitting data by the energy harvesting device may include modulating the data on a backscattered signal, and in the second transmission mode, transmitting data by the energy harvesting device may include actively generating and transmitting a signal on which the data is modulate. The apparatus may also be caused to configure an intermediate node to transmit an activation signal to the energy harvesting device in the first transmission mode as a default mode.

Some example embodiments may provide at least one processor and at least one memory storing instructions that, when executed by the at least one processor, cause the apparatus at least to indicate, to a network entity, that the apparatus supports a backscattering mode and an active transmission mode. In the backscattering mode, transmitting data may include modulating the data on a backscattered signal, and in the active transmission mode, transmitting data may include actively generating and transmitting a signal on which the data is modulated. The apparatus may also be caused to configure an energy threshold for mode switching between the backscattering mode and the active transmission mode and operate in the backscattering mode as a default mode in which an activation signal is received from an intermediate node. The apparatus may further be caused to receive a first switch signal from the network entity to switch from the backscattering mode to the active transmission mode, and switch, upon the received first switch signal, from the backscattering mode to operate in the active transmission mode.

Various example embodiments may provide at least one processor and at least one memory storing instructions that, when executed by the at least one processor, cause the apparatus at least to receive, from an energy harvesting device, an indication that the energy harvesting device supports a backscattering mode and an active transmission mode. In the backscattering mode, transmitting data by the energy harvesting device may include modulating the data on a backscattered signal, and in the active transmission mode, transmitting data by the energy harvesting device may include actively generating and transmitting a signal on which the data is modulated. The apparatus may also be caused to configure an intermediate node to transmit an activation signal to the energy harvesting device in the backscattering mode as a default mode and transmit a first switch signal to the energy harvesting device to switch from the backscattering mode to the active transmission mode.

Certain example embodiments may provide at least one processor and at least one memory storing instructions that, when executed by the at least one processor, cause the apparatus at least to indicate to a network entity that the apparatus supports a backscattering mode and an active transmission mode. In the backscattering mode, transmitting data may include modulating the data on a backscattered signal, and in the active transmission mode, transmitting data may include actively generating and transmitting a signal on which the data is modulated. The apparatus may also be caused to configure at least one of a timer or an energy threshold for mode switching between the backscattering mode and the active transmission mode and operate in the backscattering mode as a default mode in which an activation signal is received from an intermediate node. The apparatus may further be caused to switch, when the apparatus has not received the activation signal from the intermediate node for a time period associated with the configured timer, from the backscattering mode to operate in the active transmission mode.

Some example embodiments may provide at least one processor and at least one memory storing instructions that, when executed by the at least one processor, cause the apparatus at least to receive, from an energy harvesting device, an indication that the energy harvesting device supports a backscattering mode and an active transmission mode. In the backscattering mode, transmitting data by the energy harvesting device may include modulating the data on a backscattered signal, and in the active transmission mode, transmitting data by the energy harvesting device may include actively generating and transmitting a signal on which the data is modulated. The apparatus may be caused to configure an intermediate node to transmit an activation signal to the energy harvesting device in the backscattering mode as a default mode and receive an indication from the energy harvesting device that the energy harvesting device has switched from the backscattering mode to the active transmission mode.

Various example embodiments may provide one or more methods which perform one or more procedures according to one or more of the apparatuses described herein.

### BRIEF DESCRIPTION OF THE DRAWINGS:

For proper understanding of example embodiments, reference should be made to the accompanying drawings, as follows:
FIG. 1 illustrates an example of a block diagram of a system architecture for a hybrid AIoT device;
FIG. 2 illustrates an example of a network topology with hybrid AIoT devices;
FIG. 3 illustrates an example of an IoT topology, according to various example embodiments;
FIG. 4 illustrates a signal diagram for one or more procedures, according to certain example embodiments;
FIG. 5 illustrates an example of a flow diagram of one or more procedures of a hybrid AIoT device, according to some example embodiments;
FIG. 6 illustrates an example of a flow diagram of one or more procedures of a network entity, according to various example embodiments;
FIG. 7 illustrates an example of a flow diagram of a method, according to certain example embodiments;
FIG. 8 illustrates an example of a flow diagram of another method, according to some example embodiments;
FIG. 9 illustrates an example of a flow diagram of a further method, according to certain example embodiments;
FIG. 10 illustrates an example of a flow diagram of a method, according to various example embodiments;
FIG. 11 illustrates an example of a flow diagram of another method, according to certain example embodiments;
FIG. 12 illustrates an example of a flow diagram of further method, according to some example embodiments; and
FIG. 13 illustrates a set of apparatuses, according to various example embodiments.

### DETAILED DESCRIPTION:

It will be readily understood that the components of certain example embodiments, as generally described and illustrated in the figures herein, may be arranged and designed in a wide variety of different configurations. The following is a detailed description of some example embodiments of systems, methods, apparatuses, and non-transitory computer program products for assisting node-based hybrid ambient Internet of Things (IoT) device communication. Although the devices discussed below and shown in the figures refer to 5G/6G or Next Generation NodeB (gNB) devices and user equipment (UE) devices, this disclosure is not limited to only gNBs and UEs.

It may be readily understood that the components of certain example embodiments, as generally described and illustrated in the figures herein, may be arranged and designed in a wide variety of different configurations. Different reference designations from multiple figures may be used out of sequence in the description, to refer to a same element to illustrate their features or functions. If desired, the different functions or procedures discussed herein may be performed in a different order and/or concurrently with each other. Furthermore, if desired, one or more of the described functions or procedures may be optional or may be combined. As such, the following description should be considered as illustrative of the principles and teachings of certain example embodiments, and not in limitation thereof.

In 5G/6G technology, Internet of Things (IoT) devices have been and will continue to rapidly increase and may be applied in a variety of applications. As the number of IoT devices increases, it will become more important to increase production efficiency while reducing the size, cost, and power consumption for the IoT devices. For example, routine replacement of batteries for the IoT devices may be impractical or otherwise undesirable due to the costs and consumption of materials, excess waste, and increased manpower demands. One solution for reducing the need to routinely replace batteries is to use energy harvested from the surrounding environment to power IoT devices for self-sustainable communications. This may be particularly useful in implementations in which a large number of devices are used, such as identification (ID) tags, sensors, healthcare devices, and/or logistics objects (e.g., tracking devices). This type of IoT device may be referred to an ambient IoT device which may be powered by energy harvesting, such that, for example, the device may be either battery-less or equipped with limited energy storage capabilities (e.g., using a capacitor).

Ambient IoT device may be used to complement existing IoT technologies and extend the usage to additional use cases that may demand more cost-effective, power-efficient, and/or battery-less functionalities. 3^{rd} Generation Partnership Project (3GPP) specifications may define certain IoT devices that consume relatively low power, such as tens or hundreds of milliwatts, during transceiving, and/or even lower cost and lower power consumption, such as for implementations in which battery-less devices are desired.

An IoT device may be a passive radio system that harnesses energy from wireless signals sent on specific carriers and/or bandwidths and charges a simple circuitry that, once activated, may emit or reflect a signal which encodes at least the ID of the passive radio.

A device based on energy harvesting may operate in an active or a passive mode. The device may use energy harvested from wireless radio waves or any other form of energy that can be harvested in its environment or implementation. The device may be expected to operate with ultra-low power in the range from tens of microwatts to hundreds of microwatts. For example, if energy is harvested from wireless radio waves, the output power of an energy harvester device may be from several micro-watt to tens of micro-watt. If a solar panel is used for energy harvesting from solar/light, the output power would be less than 1 milli-watt due to the small size of the solar panel. An energy harvesting device can harvest energy and may then use an active circuit to perform transmission, such as, for example, using a conventional transmitter. Certain energy harvesting devices, such as the passive IoT devices or tags, do not possess active transmission circuitry and may use backscattering to transmit data. For example, a passive IoT device may use a passive radio system that harnesses energy from wireless signals sent on specific carriers and/or bandwidths and charges a simple circuitry that, once activated, may emit or reflect a signal which encodes at least an ID of the passive radio.

One example implementation of a passive IoT device which uses backscattering may be a radio frequency identification (RFID). The RFID device may be formed by a wireless system comprised of one or more tags and one or more readers. RFID may be designed for short-range communications.

Ambient IoT device have been widely used in various vertical industries, such as, for example, logistics, manufacture, transportation, energy industry and the like. Enabling passive/ambient IoT devices, in both public and private networks, may provide various benefits to the 5G ecosystem. 3GPP specifications may consider the operation of ambient IoT devices under extreme environmental conditions, such as high pressure, extremely high/low temperature, other environmental factors (e.g., humidity), vibration, and the like. 3GPP specifications may also consider design parameters such as ultra-low complexity (e.g., cost), relatively small terminal size or form factor (e.g., thickness of mm), maintenance-free design and a longer life cycle.

3GPP specifications may define that an ambient IoT device may have few hundred *µ*W peak power consumption, energy storage, initial sampling frequency offset (SFO) up to 10*^{X}* ppm, and/or both UL and/or DL amplification. The UL transmission of the ambient IoT device may be generated internally by the ambient IoT device or backscattered on a carrier wave provided externally. An ambient IoT device having both active transmission and backscattering capabilities available in the same device may be referred to as a hybrid ambient IoT (AIoT) device. The hybrid AIoT device may need a configuration to trigger a particular transmission mode, such as an active transmission mode and/or a backscattering transmission mode (also referred to herein as a backscattering mode).

AIoT devices may be categorized into multiple categories. The AIoT devices may be categorized as passive, semi-passive, or active. An AIoT device may be categorized as passive and may be a battery-less device with no energy storage capability and may not be capable of independent signal generation and/or amplification. The passive AIoT device may be capable of backscattering. These passive AIoT devices may rely on the availability of an external source of energy. An AIoT device may be categorized as semi-passive and may have limited energy storage capability that do not require manual replacement or recharging. Semi-passive AIoT devices may not generate independent signals and may utilize backscattering with potential reflection gain. An AIoT device may be categorized as active and may be an actively transmitting device with limited energy storage capabilities based on ambient energy sources. Incorporating AIoT technology into the IoT ecosystem may allow for expanding the use cases of the IoT ecosystem while reducing the dependency on conventional power sources.

The hybrid AIoT device may use active transmission if there is enough harvested energy available, from any source including 3GPP and non-3GPP network sources, as there may be no dependency on activation signals from 3GPP source. If there is enough energy available, a larger range may be achieved with the AIoT device operating in the active transmission mode.

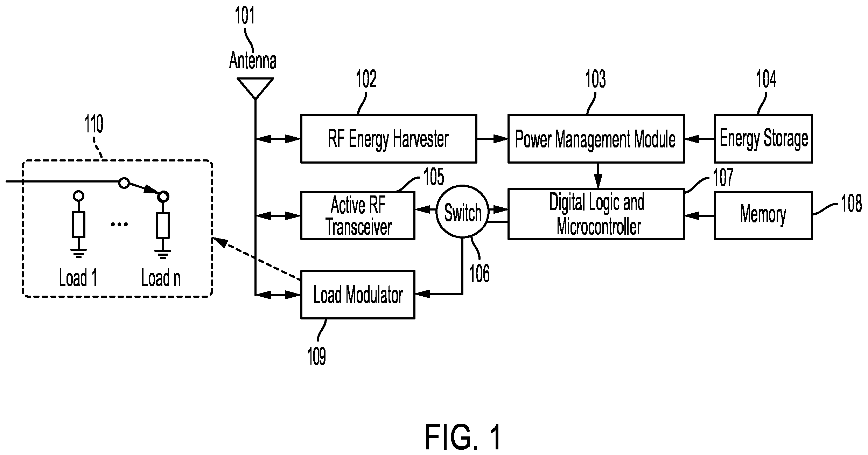

FIG. 1 illustrates an example of a block diagram of a system architecture for a hybrid AIoT device. The hybrid AIoT device may be a hybrid transceiver having capabilities for backscattering and for active transmission. The hybrid AIoT device may be configured to switch between the backscattering and active transmission modes.

The hybrid AIoT device shown in FIG. 1 may include an antenna 101, a radio frequency (RF) energy harvester module 102, a power management module 103, and an energy storage 104. The hybrid AIoT device may also include an active RF transceiver 105, a switch 106, a digital logic and microcontroller 107, and a memory 108, which may be connected to an application (not shown). The antenna 101 and the digital logic and microcontroller 107 may also be connected to a load manipulator 109, which may communicate with one or more loads 110 (e.g., Load 1... Load n). Via the switch 106, the digital logic and microcontroller 107 may control signaling to the active RF transceiver 105 and the load manipulator 109. In some example implementations, the switch 106 may be omitted and/or the digital logic and microcontroller 107 may implement the switch as part of its functionality.

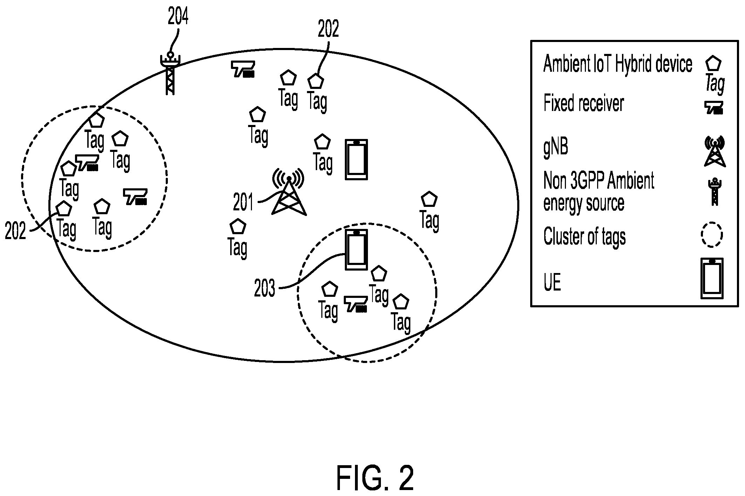

FIG. 2 illustrates an example of a network topology with hybrid AIoT devices. A hybrid AIoT device which has energy harvesting capabilities may be referred to as a hybrid energy harvesting device (H-EHD). 3GPP technologies may define multiple topologies for ambient IoT devices which may provide that a UE may be configured to serve as an intermediate node or an assisting node. For example, FIG. 2 illustrates an example of a Topology 2, as defined by 3GPP specifications, which may be an IoT topology of a base station (e.g., gNB) 201 and an H-EHD 202 connected via one or more intermediate nodes, such as a UE 203.

The base station 201 may rely on UE 203 for activation of backscattering devices due to their proximity to the H-EHD 202 and the base station 201 may not be available for backscattering communication (both activating and receiving backscattered message from the H-EHD) or RF energy transfer. The H-EHD 202 may also provide a limited backscattering support for control signaling. The UE 203 can only provide activation signals to H-EHDs 202 and may or may not provide RF signals for RF energy harvesting, depending on the implementation scenario. It may be assumed that the H-EHD 202 can harvest energy from any source including a non-3GPP source 204 to use in active transmission mode.

Various example embodiments may provide that the H-EHD 202 may be configured to be operating in backscattering mode by default. A non-3GPP energy source 204, such as solar signals, vibration, and/or motion, may be able to provide ample energy in certain circumstances. Therefore, it may be advantageous to use backscattering mode as a preferred default mode and use harvested energy from the natural sources for active mode transmission whenever backscattering mode is not feasible due to UEs 203 becoming not available for providing activation signals.

Certain example embodiments may provide technological advantages to allow a network or the core (5GC) network to pre-configure or configure a UE for operations in, for example, Topology 2, as discussed herein. Certain example embodiments may also provide configuring mode switching between active transmission and backscattering modes in H-EHDs based on the UE's (intermediate node) availability to provide activation signals and H-EHDs stored energy. Backscattering may be configured as the default mode for H-EHDs and an H-EHD can be configured by the network to operate in active transmission mode if UE is not available and the H-EHD has a threshold level of stored harvested energy.

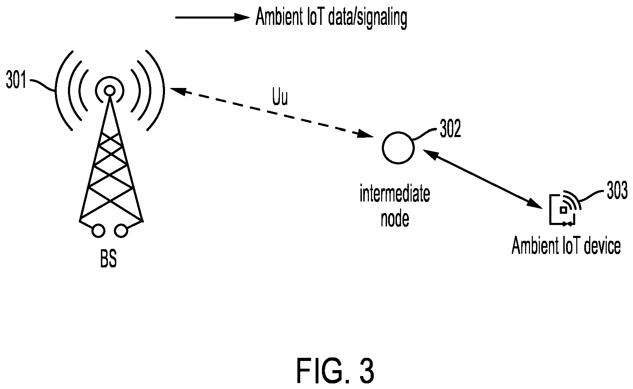

FIG. 3 illustrates an example of an IoT topology, according to various example embodiments. The IoT topology may include a base station (BS) 301 (e.g., gNB) and an ambient IoT device 303 (H-EHD) connected via an intermediate node 302 (e.g., a UE). 3GPP specifications may refer to this topology as Topology 2. This IoT topology provides that the intermediate node 302 is a bidirectional intermediate node, which may be a UE 302. The Topology 2 as shown in FIG. 3 may be used where a network controlled intermediate node provides activation signals to the H-EHD 303. If no UE is available to provide activation signal, the H-EHD 303 may not be activated directly by signals from the base station 301. The UE 302 or base station 301 may operate as readers. The H-EHD 303 may be in default backscattering mode as base station 301 and UEs 302 are not configured to provide RF energy harvesting signals for energy harvesting for active transmissions, while harvesting energy from the natural (non-3GPP) resources may be unpredictable and may not be able to be controlled for QoS guarantees.

Various example embodiments may provide H-EHD(s) that may be configured to operate in default backscattering mode by the network (e.g., base station) when one or more UEs is available to provide activation signals to the H-EHD(s). However, the H-EHD(s) may harvest energy from the natural (non-3GPP) sources when the H-EHD(s) are operating in backscattering mode and store the harvested energy in a storage for future use. When no UE is available in a vicinity of the H-EHD(s), the H-EHD(s) cannot be provided with activation signals. The network may configure the H-EHD(s) to operate in active transmission mode (as a fallback option) if the H-EHD(s) have harvested and stored energy greater than a threshold amount.

Some example embodiments may provide that, based on an energy status report received from the H-EHD, the gNB may estimate how many transmissions can be made by the H-EHD in active transmission mode. This provides the network with flexibility in choosing/selecting parameters to search for suitable intermediate nodes while keeping the H-EHD operational as long as the H-EHD has at least some energy stored, which may be from any sources and may be primarily from the natural (non-3GPP) sources. The gNB may search for UE(s) to provide activation signals to the H-EHD. To further improve backup communication, the H-EHD may be configured to switch back to the backscattering mode as soon as an alternative UE is found for providing activation signals to the H-EHD. This allows the H-EHD to not spend its stored energy whenever the UE is available to provide activation signals.

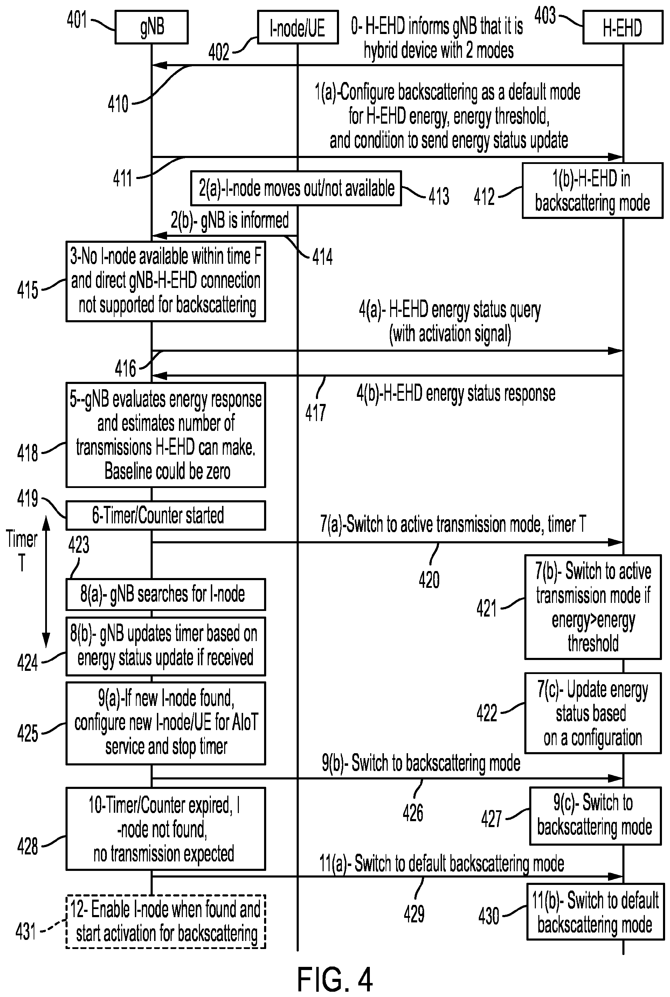

FIG. 4 illustrates a signal diagram for one or more procedures, according to various example embodiments. The one or more procedures may be performed by a configuration of, for example, a base station 401, such as a gNB, an intermediate node 402, such as a UE, and an H-EHD 403. The gNB 401, the UE 402, and the H-EHD 403 may perform various procedures according to certain example embodiments, as described below.

The one or more procedures may include, at 410, the H-EHD 403 may inform the gNB 401 that it has capabilities of a hybrid device with at least two transmission modes, such as an active transmission mode and a backscattering mode. The H-EHD 403 may inform the network/gNB, for example, when the H-EHD 403 first communicates with the network (e.g., establishes a connection with the network). This could be performed by, for example, the H-EHD 403 when the H-EHD 403 enters a coverage area of the gNB 401 or may be performed when the H-EHD 403 registers with the 5GC network. At 411, the gNB 401 may configure the H-EHD 403 to operate in a default mode, such as operating in a backscattering mode as its default mode. The gNB 401 may configure the transmission modes by providing a configuration to the H-EHD 403. The default mode may be a transmission mode in which the H-EHD 403 initially operates and/or reverts based on certain conditions, such as a presence of an activation signal and/or a sufficiently low energy storage level (e.g., below a threshold level). The gNB 401 may also configure an energy threshold to be used by the H-EHD 403 for triggering the switching of the transmission mode. At 412, the H-EHD 403 may activate the backscattering mode as its default mode of operation based on the received configuration from the gNB 401. When the UE 402 is in a vicinity of the H-EHD 403, the UE 402 may provide one or more activation signals, when implemented using, e.g., Topology 2. Any of the 3GPP nodes, such as the gNB 401 or the UE 402, may be used as readers in Topology 2.

At 413, the UE 402 may be determined to be unable to provide an activation signal to the H-EHD 403. For example, the UE 402 or the H-EHD 403 may no longer be within range or the same coverage area as each other, or the UE 402's energy may not be enough to support activation service, or the UE 402 may prefer to use its resources for its own QoS transactions. At 414, the UE 402 may inform the gNB 401 that it is unable to provide the activation signal to the H-EHD 403. At 415, the gNB 401 may initiate a procedure to search for and find a new alternative intermediate node or UE which is in the vicinity of the H-EHD 403 and may have the capability to provide activation signals to the H-EHD 403. When the gNB 401 is not able to find an alternative UE to provide activation signals, within a time period F, the gNB 401 may initiate a procedure in which the H-EHD 403 operates in the active transmission mode as a fallback option. When the H-EHD 403 has sufficient energy to operate in the active transmission mode, the H-EHD 403 may provide the gNB 401 with flexibility (e.g., additional time) to locate the new alternative intermediate node or UE without interrupting services provided by the H-EHD 403.

For configuring the H-EHD 403 to operate in the active transmission mode, the gNB 401 may need to know an amount of stored energy in the H-EHD 403. This stored energy may be harvested from any source, e.g., natural non-3GPP source (including non-RF sources). At 416, the gNB 401 may provide a query to the H-EHD 403 to inform the gNB 401 of its stored energy status. As the H-EHD 403 begins in the backscattering mode by default, the gNB 401 may need to include this query with an activation signal to the H-EHD 403. The gNB 401 may not be configured for information communication purposes with the H-EHD 403 but it may be configured to perform the energy status query in backscattering mode as part of its activation signal. At 417, the H-EHD 403 may be configured to evaluate or interpret the energy status query and may provide, in an energy status response message, its energy level status to the gNB 401 by modulating the energy status information over a signal sent by backscattering. In certain example embodiments, the gNB 401 may not support activation functionality and the H-EHD 403 may determine whether the H-EHD 403 has not received an activation signal from the UE 402, or another intermediate node or UE, for a time period H. The H-EHD 403 may be configured to switch its mode from the backscattering mode to the active transmission mode and may transmit its energy status directly to the gNB 401 if it does not receive an activation signal for the time period H.

At 418, the gNB 401 may receive an energy status query response from the H-EHD 403. Based on the stored energy status of the H-EHD 403 and a quality of the connection link between the gNB 401 and H-EHD 403, the gNB 401 may estimate how many transmissions the H-EHD 403 may be able to perform before its energy storage is depleted or falls below a threshold amount. This estimation by the gNB 401 may inform the gNB 401 about the urgency to find a suitable intermediate node/UE for the H-EHD 403 before connectivity loss.

At 419, the gNB 401 may start/initiate a timer T, which is based on the estimation by the gNB 401 in procedure 418. This may allow the gNB 401 to have a timeline or time period for the gNB 401 to search and potentially find a suitable intermediate node/UE to use for activation services. In some example embodiments, instead of a timer, the gNB 401 may start a counter which counts the total number of transmissions that the H-EHD 403 can make during active transmission mode before depleting its energy storage. The estimate may have some margin of error such that the H-EHD 403 may run out of energy a little before or after the timer expires.

Taking timer T as an example, at 420, the gNB 401 may send an activation signal to the H-EHD 403 to switch to the active transmission mode. The activation signal may include the timer T. At 421, the H-EHD 403 may switch to the active transmission mode and start the timer T. The H-EHD 403 may send one or more transmissions during the pendency of the timer T, using its active transmission mode based on the configuration received at procedure 411. The received configuration may include a minimum energy threshold. The minimum energy threshold may be used by the H-EHD 403 to evaluate whether it has enough stored energy to perform a transmission. Use of the threshold by the H-EHD 403 may protect against the possibility of an incorrectly estimated timer T value causing the H-EHD 403 to run out of energy before the timer T expires. At 422, the H-EHD 403 may, for each transmission, if the H-EHD 403 has harvested some energy, selectively append its energy update to a signal to the gNB 401. Some example embodiments may provide that the H-EHD 403 may append its energy status to every transmission.

While the timer T is running (e.g., counting up or down), at 423, the gNB 401 may continue searching for a suitable intermediate node/UE for the H-EHD 403 with parameters accounting for the length of time of the timer T. For example, the parameters may include a threshold amount of time in which the UE may be available to provide activation signals, such as if the timer T has a relatively large value, the threshold may also be relatively large as there is no urgency to select a UE which can provide very weak or few activation signals. At 424, when the gNB 401 receives an energy update from the H-EHD 403, the gNB 401 may update the timer T. For example, if the gNB 401 receives information that the H-EHD 403 has harvested energy since the timer T started, the gNB 401 may re-estimate the value of the timer T and may extend or reduce its duration due to the re-estimation. The gNB 401 may inform the H-EHD 403 of the updated timer T.

When a suitable intermediate node/UE is found by the gNB 401 before expiration of the timer T, the gNB 401 may stop the timer T and, at 425, the gNB 401 may configure the newly found intermediate node/UE for activation service(s) for the H-EHD 403. The newly found intermediate node/UE may now act as the UE 402. At 426, the gNB 401 may send a message to the H-EHD 403 to switch to the backscattering mode and wait for an activation signal from the UE 402. The gNB 401 may also send one or more configurations which may be used for receiving the activation signal from the UE 402. At 427, the H-EHD 403 may stop the timer T upon receiving the message from the gNB 401 and may switch to the backscattering mode based on the configuration(s) received.

At 428, when no intermediate node/UE is found by the gNB 401, the timer T may expire after the time period set by the timer T. The expiration of the timer T may indicate that the gNB 401 has not been able to find a suitable intermediate node/UE to act as an activator for the H-EHD 403 and insufficient energy may be available for the H-EHD 403 to continue operating in the active transmission mode. At 429, the gNB 401 may send a signal to the H-EHD 403 to switch to the default backscattering mode and wait for potential activation signal. At 430, the H-EHD 403 may switch to the backscattering mode, either in response to the signal from the gNB 401 or by its own decision, so that the H-EHD 403 may be able to receive an activation signal when an intermediate node/UE (e.g., UE 402) sends the activation signal. In some example embodiments, as an alternative, the H-EHD 403 may not wait to receive the signal from the gNB 401 to switch to the default backscattering mode and instead may switch to the default backscattering mode by its own decision. At 431, when the gNB 401 selects a suitable intermediate node/UE as the new UE 402 for the H-EHD403, the gNB 401 may configure the intermediate node/UE (e.g., UE 402) and may allow it to send one or more activation signals to the H-EHD 403.

Various example embodiments may additionally provide for a scenario in which the timer T, as determined by the gNB 401, is too optimistic (i.e., longer than the time in which the H-EHD 403 can operate in the active mode) and the H-EHD 403 has stored energy less than a configured energy threshold. The H-EHD 403 may switch from the active transmission mode back to the backscattering mode and may inform, via a signal or other transmission, the gNB 401, the switch, and/or that the timer T estimated/determined by the gNB 401 was too large/long and the H-EHD 403 may not have sufficient stored energy. Upon receiving this transmission, the gNB may terminate its timer T prematurely and may be informed that the H-EHD 403 has already switched to the backscattering mode. As the gNB 401 has not found a suitable intermediate node/UE, it is not possible to maintain any connectivity between the gNB 401 and the H-EHD 403 until the gNB 401 finds a suitable intermediate node/UE (e.g., UE 402).

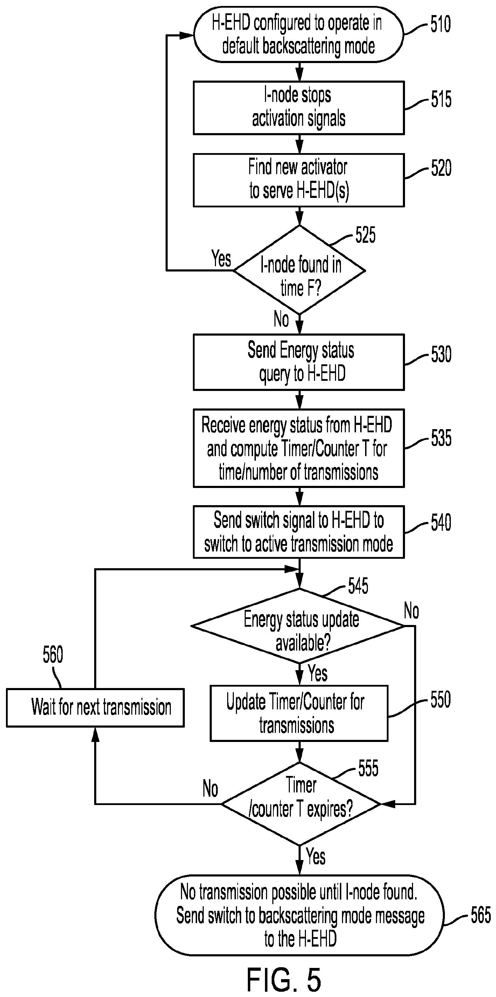

FIG. 5 illustrates an example of a flow diagram for procedures performed by a network device (e.g., gNB), according to various example embodiments. An H-EHD may be configured to operate in a backscattering mode using an activation signal(s) from an assisting node/UE. When an intermediate node/UE stops providing activation signals, for example, as it moves out of a coverage area or runs out of energy, the intermediate node/UE may inform the gNB and the gNB may trigger a procedure to search for and locate another intermediate node/UE to serve as an activator in the vicinity of the H-EHD. The gNB may try to locate an alternative/new intermediate node/UE (as an activator) as quickly as possible. For example, the gNB may already have a list of alternative alternative/new intermediate node/UE). The gNB may send a configuration to the alternative/new intermediate node/UE and the H-EHD(s) to establish connectivity.

When the gNB is unable to find an alternative/new intermediate node/UE in a time period F, the gNB may need to trigger a process to configure the H-EHD to switch its transmission mode. The gNB may continue searching for an alternate intermediate node/UE (as an activator). The gNB may send a query to the H-EHD requesting a status of stored energy in the backscattering mode when operating in the backscattering mode. The gNB may not be configured to provide activation signals to H-EHDs directly for information transmission. The gNB may be configured to provide a control query when the H-EHD is in the coverage area of the gNB, but direct information transmission was stopped due to operational reasons (e.g., poor energy efficiency, excessive interference). Some example embodiments may provide that the gNB may not support activation functionality and may determine whether the H-EHD has not received an activation signal from an intermediate node/UE for a time period H. The H-EHD may be configured to switch transmission mode from the backscattering mode to the active transmission mode on its own (without instruction from the gNB) and may transmit its energy status to the gNB in the active transmission mode.

Various example embodiments may provide, based on the received stored energy status of the H-EHD, the gNB may estimate an amount of time in which the H-EHD may operate in active transmission mode and may start the timer T. The timer T may be communicated to the H-EHD and the H-EHD may switch transmission modes, such as, for example, switching from the backscattering mode to the active transmission mode and may start communicating based on the provided configuration. The purpose of the timer T may be to inform the gNB about the amount of time in which the H-EHD can maintain connectivity to the gNB while the gNB is searching for an alternative intermediate node/UE as an activator. The gNB may change its search criterion or parameters based on the timer T. The H-EHD may send an energy update to the gNB if the H-EHD harvests an amount of extra energy while operating in the active transmission mode. Upon receiving the energy storage update from the H-EHD, the gNB may extend a value of the timer T and may update the H-EHD.

While the timer T is running, the gNB may search for the intermediate node/UE (as an activator) and may be informed or may learn that the H-EHD has connectivity to the network using the active transmission mode. If the timer T expires and the gNB is not able to find a new intermediate node/UE, the gNB may determine that it is not possible for the H-EHD to maintain connectivity to the network (e.g., gNB). The gNB may send a message to the H-EHD to switch back to the default backscattering mode and wait for the activation signal to be received via a new intermediate node/UE (as an activator).

Various example embodiments may provide that the one or more procedures shown in FIG. 5 may include, at 510, a gNB may configure an H-EHD to operate in a backscattering mode and an active transmission mode, in which the backscattering mode may be set as a default mode, and at 515, an intermediate node/UE, which has been providing activation signal(s) to the H-EHD, may stop providing the activation signal(s). At 520, a gNB may search for a new/alternative intermediate node/UE to be an activator for the H-EHD, and at 525, the gNB may determine whether the new/alternative intermediate node/UE has been found within a time period F, which may be set by the gNB or the H-EHD. When the new/alternative intermediate node/UE has been successfully found within the time period F, the gNB may inform the H-EHD to operate in the backscattering mode and the H-EHD may wait to receive an activation signal from the new/alternative intermediate node/UE. At 530, when the gNB is unable to find a new/alternative intermediate node/UE within the time period F, the gNB may send an energy status inquiry/message to the H-EHD. At 535, the gNB may receive, from the H-EHD, the energy status and may compute/determine a timer T (or counter) for a set amount of time and/or for a determined number of transmissions. At 540, the gNB may send a switch signal to the H-EHD to switch from the backscattering mode to the active transmission mode.

The one or more procedures may include, at 545, the gNB may determine whether an energy status update is available from the H-EHD. At 550, when the energy status update is received from the H-EHD, the gNB may update the timer T (or counter). At 555, the gNB may determine whether the timer T has expired. At 560, when the gNB determines that the timer T has not expired, the gNB may continue to perform active communication with the H-EHD and may wait for a next transmission from the H-EHD, which is operating in the active transmission mode. At 565, when the gNB determines that the timer T has expired, the gNB may determine that transmission from H-EHD is no longer possible and may send a message or signal to the H-EHD to switch from the active transmission mode to the backscattering mode.

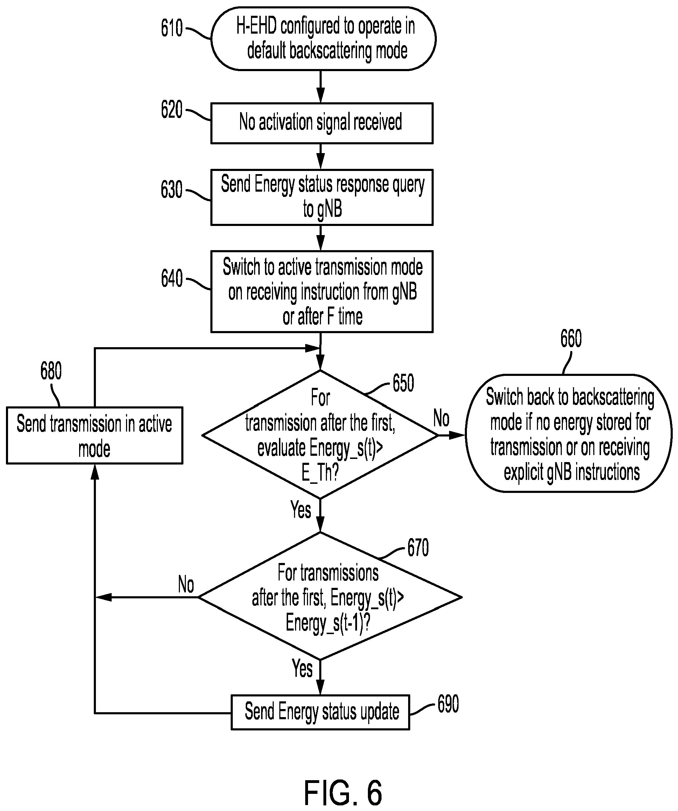

FIG. 6 illustrates an example of a flow diagram for procedures performed by an IoT device (e.g., H-EHD), according to various example embodiments. The H-EHD may be configured to operate in the backscattering mode as the default mode with an intermediate node/UE. The H-EHD may receive an energy status query from the gNB when the intermediate node/UE stops providing activation signals to the H-EHD. The H-EHD may backscatter an energy status response message to the gNB, which may include an amount of energy stored by the H-EHD. The stored energy may be from energy harvested by the H-EHD. Based on the energy status response, the gNB may send a timer T and one or more signals for the H-EHD to change its transmission mode. When the H-EHD receives the timer T and signals from the gNB, the H-EHD may switch the transmission mode from the backscattering mode to the active transmission mode. Some example embodiments may provide that the H-EHD may switch the transmission mode from the backscattering mode to the active transmission mode without input from the gNB when the H-EHD has not received any activation signal for a time period H and may have a stored energy level which is greater than an energy threshold, which may be configured by the gNB.

The H-EHD may send transmissions to the gNB until the timer T expires. Additionally, or alternatively, an energy threshold E_th may be configured at the H-EHD, which may need to be satisfied in order to make further transmissions. The energy threshold E_th may be configured by the gNB or defined in specification. The H-EHD may compare its stored energy with the energy threshold E_th before every transmission and may make a transmission when the stored energy level is greater than or equal to the energy threshold E_th. When the stored energy level of the H-EHD is below the energy threshold E_th, the H-EHD may send a message or signal to the gNB to stop the timer T. When the stored energy level is greater than or equal to the energy threshold E_th, the H-EHD may determine a condition for whether it should send an energy update to the gNB, which may be appended to its transmission. The H-EHD may append its energy status update with a single transmission, multiple transmissions, or every transmission.

Certain example embodiments may provide that the condition may be comparing energy stored at a time t with energy stored at time t-1. When this stored energy has increased from t-1 to t, the H-EHD may have harvested more energy than it spent on the transmission(s) in a slot at t-1. The H-EHD then send the energy status update to the gNB, which informs the gNB to update its timer and send the updated timer T back to the H-EHD.

Some example embodiments may provide that the H-EHD may continue performing transmissions in the active transmission mode until: (i) the H-EHD may be interrupted by the gNB when it finds a new/alternative intermediate node/UE to support backscattering mode, which may help the H-EHD to save its harvested energy for future use; or (ii) the H-EHD timer T expires and the gNB may signal the H-EHD to switch its transmission mode to the backscattering mode and to wait for the activation signal(s) whenever the new/alternative intermediate node/UE is available; or (iii) the timer T has not expired and the stored energy is less than the energy threshold E_th so that the H-EHD may not support the active transmission mode, which may occur when the timer T is not computed accurately by the gNB. The H-EHD may need to send a timer interrupt message to the gNB and switch to the default backscattering mode.

The timer T estimation/determination may be pessimistic (T<actual value) or may be optimistic (T>actual value). A value T>actual value may have the effect that the H-EHD may run out of energy before the timer expires and the H-EHD may send the interrupt message to the gNB. When the estimate/calculation of the timer T is pessimistic, the timer may expire and the H-EHD may still have some energy to support active transmissions. This could also result in premature loss of connectivity for the H-EHD and the H-EHD may be able to support active transmissions for a period of time even when no intermediate node/UE has been found for providing the activation signals. Thus, it may be desired for the estimation by the gNB of the timer T value to be as close as possible to the actual value of time.

Various example embodiments may provide that the one or more procedures shown in FIG. 6 may include, at 610, the H-EHD may be configured to operate in a backscattering mode by default, and at 620, the H-EHD may determine that an activation signal has not been received for a time period H. At 630, the H-EHD may transmit an energy status response or update message to the gNB, and at 640, the H-EHD may switch from the backscattering mode to the active transmission mode. The switching to the active transmission mode may be performed upon receiving an instruction from the gNB or after the time period H. At 650, the H-EHD may determine, for any transmission after a first transmission, whether the stored energy (*Energy_s(t)*) is greater than or equal to the energy threshold E_th. At 660, when the stored energy (*Energy_s(t)*) is less than the energy threshold E_th, the H-EHD may switch the transmission mode of the H-EHD from the active transmission mode to the backscattering mode. The H-EHD may perform the mode switching when insufficient energy is stored for transmissions or upon receiving an instruction from the gNB. At 670, when the stored energy (*Energy_s(t)*) is greater than or equal to the energy threshold E_th, the H-EHD may determine, for any transmission after the first transmission, whether the currently stored energy (*Energy_s(t)*) is greater than a prior amount of stored energy (*Energy_s(t-1)*)*.*

At 680, when the H-EHD determines that the currently stored energy (*Energy_s(t)*) is not greater than a prior amount of stored energy (*Energy_s(t-1)*), the H-EHD may send a transmission in the active transmission mode. At 690, when the H-EHD determines that the currently stored energy (*Energy_s(t)*) is greater than the prior amount of stored energy (*Energy_s(t-1)*), the H-EHD may transmit an energy status update message to the gNB.

Various example embodiments may provide technological advantages for policy provisioning to a UE and execution of the policy by the UE in various topologies implemented AIoT devices. Certain example embodiments may provide for efficient communication for an H-EHD by suggesting or instructing a transmission mode (e.g., backscattering or active transmission mode) when the H-EHD does not have enough stored energy. Some example embodiments may provide a Topology 2 based backscattering mode which may be set as a default mode, as the gNB may not support activation for the H-EHDs and may not rely on non-3GPP sources for energy due to quality of service (QoS) requirements.

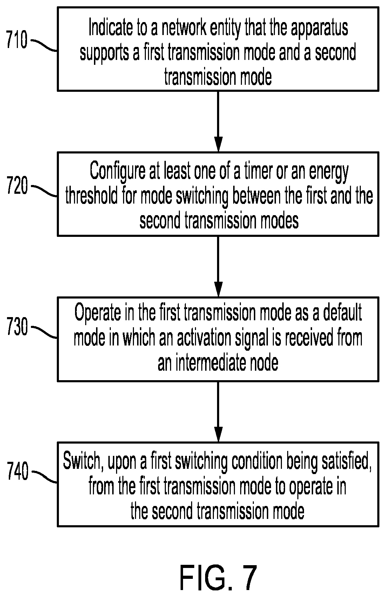

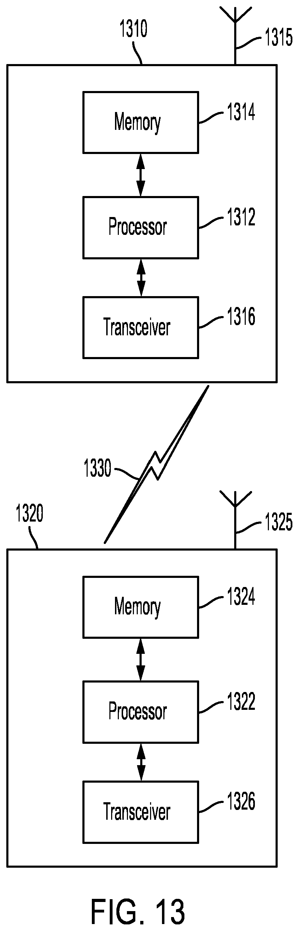

FIG. 7 illustrates an example flow diagram of a method, according to certain example embodiments. In an example embodiment, the method of FIG. 7 may be performed by a network element, or a group of multiple network elements in a 3GPP system, such as LTE or 5G-NR. For instance, in an example embodiment, the method of FIG. 7 may be performed by an H-EHD similar to apparatus 1310 illustrated in FIG. 13.

According to various example embodiments, the method of FIG. 7 may include, at 710, indicating to a network entity that the apparatus 1310 supports a first transmission mode and a second transmission mode. In the first transmission mode, transmitting data may include modulating the data on a backscattered signal, and in the second transmission mode, transmitting data may include actively generating and transmitting a signal on which the data is modulated. At 720, the method may include configuring at least one of a timer or an energy threshold for mode switching between the first transmission mode and the second transmission mode. At 730, the method may also include operating in the first transmission mode as a default mode in which an activation signal is received from an intermediate node. At 740, the method may further include switching, upon a first switching condition being satisfied, from the first transmission mode to operate in the second transmission mode.

Certain example embodiments may provide that the method also includes receiving, from the network entity, a configuration comprising the at least one of the timer or the energy threshold. Operating in the first transmission mode as the default mode may be in response to a configuration received from the network entity configuring the first transmission mode as the default mode. The method may further include providing an indication to the network entity that the apparatus has switched from the first transmission mode to the second transmission mode. The method may include transmitting, to the network entity, an energy status of an energy storage level of the apparatus in response to receiving a query from the network entity during operating in the first transmission mode. The method may also include providing, during operating in the second transmission mode, an energy status of an energy storage level of the apparatus to the network entity.

Some example embodiments may provide that the first switching condition may be satisfied when a switch signal is received from the network entity instructing the apparatus to switch from the first transmission mode to the second transmission mode, or when the apparatus has not received the activation signal from the intermediate node for a time period associated with the configured timer. The first switching condition may be satisfied when an amount of energy stored by the apparatus is above a first configured energy threshold. The method may also include switching, upon a second switching condition being satisfied, from the second transmission mode to the first transmission mode. The method may further include providing an indication to the network entity that the apparatus has switched from the second transmission mode to the first transmission mode. The second switching condition may be satisfied when a second switch signal is received from the network entity instructing the apparatus to switch from the second transmission mode to the first transmission mode, or when a second timer expires. The second timer may indicate a time period in which the apparatus operates in the second transmission mode.

Various example embodiments may provide that the second timer may be one of the configured timers or is received within the switch signal from the network entity instructing the apparatus to switch from the first transmission mode to the second transmission mode. The method may also include receiving, from the network entity, an update of the second timer. The method may further include receiving, from the network entity, an indication that a second intermediate node has been configured for the apparatus. The switching from the second transmission mode to the first transmission mode may be based on the received indication. The second switching condition may be satisfied when an amount of energy stored by the apparatus is below a second configured energy threshold. The method may further include when the amount of energy stored by the apparatus is below the second configured energy threshold, disregarding any timer associated with the switching from the second transmission mode to the first transmission mode.

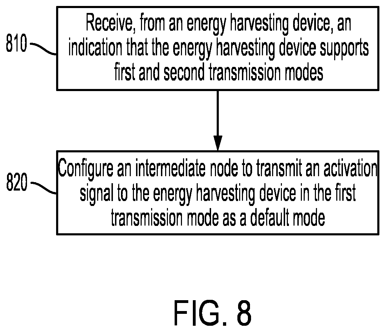

FIG. 8 illustrates an example flow diagram of a method, according to certain example embodiments. In an example embodiment, the method of FIG. 8 may be performed by a network element, or a group of multiple network elements in a 3GPP system, such as LTE or 5G-NR. For instance, in an example embodiment, the method of FIG. 8 may be performed by a network entity or access node, such as a gNB, similar to apparatus 1320 illustrated in FIG. 13.

According to various example embodiments, the method of FIG. 8 may include, at 810, receiving, from an energy harvesting device, an indication that the energy harvesting device supports a first transmission mode and a second transmission mode. In the first transmission mode, transmitting data by the energy harvesting device may include modulating the data on a backscattered signal, and in the second transmission mode, transmitting data by the energy harvesting device may include actively generating and transmitting a signal on which the data is modulate. At 820, the method may also include configuring an intermediate node to transmit an activation signal to the energy harvesting device in the first transmission mode as a default mode.

Some example embodiments may provide that the method also includes transmitting, to the energy harvesting device, a configuration comprising at least one of a timer or an energy threshold for mode switching between the first transmission mode and the second transmission mode. The method may further include transmitting a configuration to the energy harvesting device configuring the first transmission mode as the default mode and receiving, from the energy harvesting device operating in the second transmission mode, an energy status of an energy storage level of the energy harvesting device. The method may also include receiving an indication from the energy harvesting device that the energy harvesting device has switched from the first transmission mode to the second transmission mode. The method may further include determining that the intermediate node is not available for transmitting the activation signal to the energy harvesting device and searching for another intermediate node to communicate with the energy harvesting device.

Various example embodiments may provide that the method includes transmitting a result of the search to the energy harvesting device, transmitting, to the energy harvesting device operating in the first transmission mode, a query regarding an energy status of an energy storage level of the energy harvesting device in response to failing to obtain the other intermediate node, and receiving the energy status of the energy storage level of the energy harvesting device. The failing to obtain the other intermediate node may be determined based on a time period for searching for the other intermediate node. The method may also include transmitting a switch signal to the energy harvesting device to switch from the first transmission mode to the second transmission mode. The switch signal may include a timer indicating a time period in which the energy harvesting device operates in the second transmission mode. The timer may be determined or updated based on the received energy status of the energy storage level of the energy harvesting device. The method may include transmitting the updated timer to the energy harvesting device and, when the energy harvesting device operates in the second transmission mode, transmitting a second switch signal to the energy harvesting device to switch from the second transmission mode to the first transmission mode in response to obtaining the other intermediate node. The method may further include receiving an indication from the energy harvesting device that the energy harvesting device has switched from the second transmission mode to the first transmission mode.

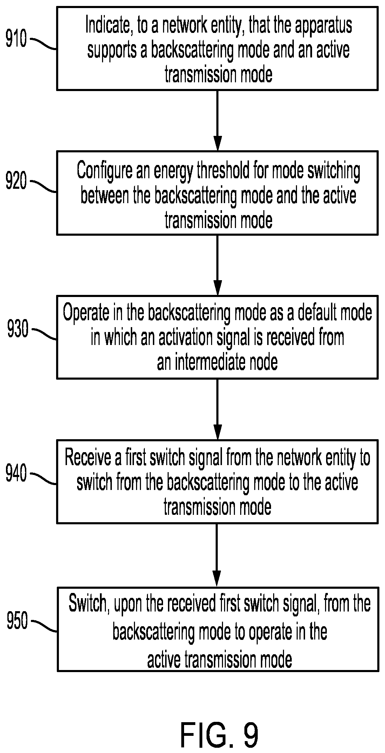

FIG. 9 illustrates an example flow diagram of a method, according to certain example embodiments. In an example embodiment, the method of FIG. 9 may be performed by a network element, or a group of multiple network elements in a 3GPP system, such as LTE or 5G-NR. For instance, in an example embodiment, the method of FIG. 9 may be performed by an H-EHD similar to apparatus 1310 illustrated in FIG. 13.

According to various example embodiments, the method of FIG. 9 may include, at 910, indicating, to a network entity, that the apparatus supports a backscattering mode and an active transmission mode. In the backscattering mode, transmitting data may include modulating the data on a backscattered signal, and in the active transmission mode, transmitting data may include actively generating and transmitting a signal on which the data is modulated. At 920, the method may include configuring an energy threshold for mode switching between the backscattering mode and the active transmission mode, and, at 930, operating in the backscattering mode as a default mode in which an activation signal is received from an intermediate node. At 940, the method may further include receiving a first switch signal from the network entity to switch from the backscattering mode to the active transmission mode, and, at 950, switching, upon the received first switch signal, from the backscattering mode to operate in the active transmission mode.

Certain example embodiments may provide that the method includes receiving, from the network entity, a configuration comprising the energy threshold. Operating in the backscattering mode as the default mode may be in response to a configuration received from the network entity configuring the backscattering mode as the default mode. The method may also include transmitting, to the network entity, an energy status of an energy storage level of the apparatus in response to receiving a query from the network entity during operating in the backscattering mode, and providing, during operating in the active transmission mode, an energy status of an energy storage level of the apparatus to the network entity. The switching may be upon an amount of energy stored by the apparatus being above a first configured energy threshold.

Some example embodiments may provide that the method also includes switching, upon a switching condition being satisfied, from the active transmission mode to the backscattering mode and providing an indication to the network entity that the apparatus has switched from the active transmission mode to the backscattering mode. The switching condition may be satisfied when a second switch signal is received from the network entity instructing the apparatus to switch from the active transmission mode to the backscattering mode, or when a timer expires. The timer may indicate a time period in which the apparatus operates in the active transmission mode. The timer may be received within the first switch signal from the network entity instructing the apparatus to switch from the backscattering mode to the active transmission mode. The method may also include receiving, from the network entity, an update of the timer and receiving, from the network entity, an indication that a second intermediate node has been configured for the apparatus. The switching from the active transmission mode to the backscattering mode may be based on the received indication. The second switching condition may be satisfied when an amount of energy stored by the apparatus is below a second configured energy threshold. The method may further include, when the amount of energy stored by the apparatus is below the second configured energy threshold, disregarding any timer associated with the switching from the active transmission mode to the backscattering mode.

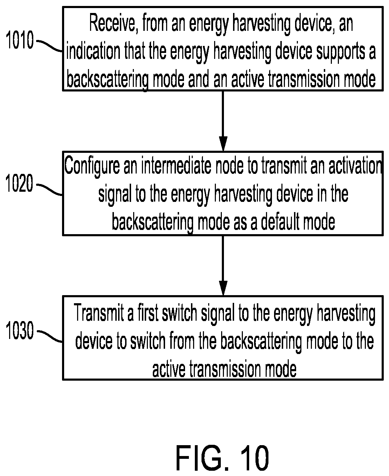

FIG. 10 illustrates an example flow diagram of a method, according to certain example embodiments. In an example embodiment, the method of FIG. 10 may be performed by a network element, or a group of multiple network elements in a 3GPP system, such as LTE or 5G-NR. For instance, in an example embodiment, the method of FIG. 10 may be performed by a network entity or access node, such as a gNB, similar to apparatus 1320 illustrated in FIG. 13.

According to various example embodiments, the method of FIG. 10 may include, at 1010, receiving, from an energy harvesting device, an indication that the energy harvesting device supports a backscattering mode and an active transmission mode. In the backscattering mode, transmitting data by the energy harvesting device may include modulating the data on a backscattered signal, and in the active transmission mode, transmitting data by the energy harvesting device may include actively generating and transmitting a signal on which the data is modulated. At 1020, the method may also include configuring an intermediate node to transmit an activation signal to the energy harvesting device in the backscattering mode as a default mode. At 1030, the method may further include transmitting a first switch signal to the energy harvesting device to switch from the backscattering mode to the active transmission mode.

Some example embodiments may provide that the method includes transmitting, to the energy harvesting device, a configuration comprising an energy threshold for mode switching between the backscattering mode and the active transmission mode. The method may further include transmitting a configuration to the energy harvesting device configuring the backscattering mode as the default mode and receiving, from the energy harvesting device operating in the active transmission mode, an energy status of an energy storage level of the energy harvesting device. The method may also include determining that the intermediate node is not available for transmitting the activation signal to the energy harvesting device and searching for another intermediate node to communicate with the energy harvesting device.

Various example embodiments may provide that the method also includes transmitting a result of the search to the energy harvesting device, transmitting, to the energy harvesting device operating in the backscattering mode, a query regarding an energy status of an energy storage level of the energy harvesting device in response to failing to obtain the other intermediate node, and receiving the energy status of the energy storage level of the energy harvesting device. The failing to obtain the other intermediate node may be determined based on a time period for searching for the other intermediate node. The first switch signal may be transmitted to the energy harvesting device in response to the received energy status. The first switch signal may include a timer indicating a time period in which the energy harvesting device operates in the active transmission mode. The timer may be determined or updated based on the received energy status of the energy storage level of the energy harvesting device.

Certain example embodiments may provide that the method also includes transmitting the updated timer to the energy harvesting device and, when the energy harvesting device operates in the active transmission mode, transmitting a second switch signal to the energy harvesting device to switch from the active transmission mode to the backscattering mode in response to obtaining the other intermediate node. The method may further include receiving an indication from the energy harvesting device that the energy harvesting device has switched from the active transmission mode to the backscattering mode.

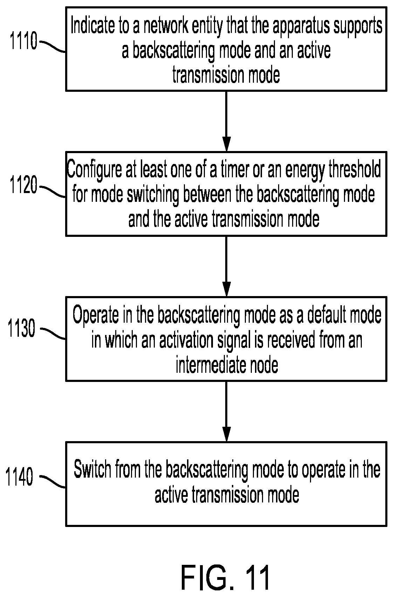

FIG. 11 illustrates an example flow diagram of a method, according to certain example embodiments. In an example embodiment, the method of FIG. 11 may be performed by a network element, or a group of multiple network elements in a 3GPP system, such as LTE or 5G-NR. For instance, in an example embodiment, the method of FIG. 11 may be performed by an H-EHD similar to apparatus 1310 illustrated in FIG. 13.

According to various example embodiments, the method of FIG. 11 may include, at 1110, indicating to a network entity that the apparatus supports a backscattering mode and an active transmission mode. In the backscattering mode, transmitting data may include modulating the data on a backscattered signal, and in the active transmission mode, transmitting data may include actively generating and transmitting a signal on which the data is modulated. At 1120, the method may also include configuring at least one of a timer or an energy threshold for mode switching between the backscattering mode and the active transmission mode, and, at 1130, operating in the backscattering mode as a default mode in which an activation signal is received from an intermediate node. At 1140, the method may include switching, when the apparatus has not received the activation signal from the intermediate node for a time period associated with the configured timer, from the backscattering mode to operate in the active transmission mode.

Certain example embodiments may provide that the method includes receiving, from the network entity, a configuration comprising the at least one of the timer or the energy threshold. Operating in the backscattering mode as the default mode may be in response to a configuration received from the network entity configuring the backscattering mode as the default mode. The method may also include providing an indication to the network entity that the apparatus has switched from the backscattering mode to the active transmission mode and providing, during operating in the active transmission mode, an energy status of an energy storage level of the apparatus to the network entity. The switching may be upon an amount of energy stored by the apparatus being above a first configured energy threshold.

Some example embodiments may provide that the method includes switching, upon a switching condition being satisfied, from the active transmission mode to the backscattering mode and providing an indication to the network entity that the apparatus has switched from the active transmission mode to the backscattering mode. The switching condition may be satisfied when a switch signal is received from the network entity instructing the apparatus to switch from the active transmission mode to the backscattering mode, or when a second timer expires. The second timer may indicate a time period in which the apparatus operates in the active transmission mode. The second timer may be one of the configured timers. The method may further include receiving, from the network entity, an update of the second timer and receiving, from the network entity, an indication that a second intermediate node has been configured for the apparatus. The switching from the active transmission mode to the backscattering mode may be based on the received indication.

Some example embodiments may provide the switching condition may be satisfied when an amount of energy stored by the apparatus is below a second configured energy threshold. The method may also include disregarding any timer associated with the switching from the active transmission mode to the backscattering mode, when the amount of energy stored by the apparatus is below the second configured energy threshold.

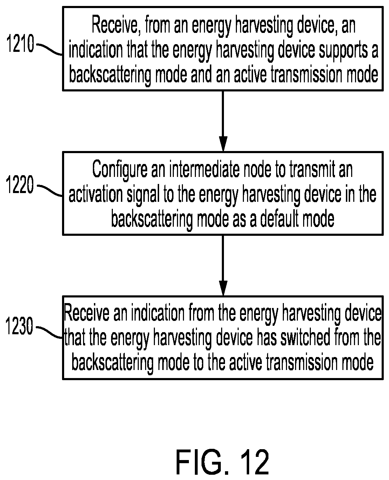

FIG. 12 illustrates an example flow diagram of a method, according to certain example embodiments. In an example embodiment, the method of FIG. 12 may be performed by a network element, or a group of multiple network elements in a 3GPP system, such as LTE or 5G-NR. For instance, in an example embodiment, the method of FIG. 12 may be performed by a network entity or access node, such as a gNB, similar to apparatus 1320 illustrated in FIG. 13.

According to various example embodiments, the method of FIG. 12 may include, at 1210, receiving, from an energy harvesting device, an indication that the energy harvesting device supports a backscattering mode and an active transmission mode. In the backscattering mode, transmitting data by the energy harvesting device may include modulating the data on a backscattered signal, and in the active transmission mode, transmitting data by the energy harvesting device may include actively generating and transmitting a signal on which the data is modulated. At 1220, the method may also include configuring an intermediate node to transmit an activation signal to the energy harvesting device in the backscattering mode as a default mode. At 1230, the method may further include receiving an indication from the energy harvesting device that the energy harvesting device has switched from the backscattering mode to the active transmission mode.

Various example embodiments may provide that the method includes transmitting, to the energy harvesting device, a configuration comprising at least one of a timer or an energy threshold for mode switching between the backscattering mode and the active transmission mode. The method may further include transmitting a configuration to the energy harvesting device configuring the backscattering mode as the default mode and receiving, from the energy harvesting device operating in the active transmission mode, an energy status of an energy storage level of the energy harvesting device. The method may include determining or updating a timer based on the received energy status of the energy storage level of the energy harvesting device. The timer may indicate a time period in which the energy harvesting device operates in the active transmission mode. The method may also include transmitting the timer to the energy harvesting device, determining that the intermediate node is not available for transmitting the activation signal to the energy harvesting device, and searching for another intermediate node to communicate with the energy harvesting device.

Certain example embodiments may provide that the method also includes transmitting a switch signal to the energy harvesting device to switch from the active transmission mode to the backscattering mode in response to obtaining the other intermediate node when the energy harvesting device operates in the active transmission mode. The method may further include receiving an indication from the energy harvesting device that the energy harvesting device has switched from the active transmission mode to the backscattering mode.

FIG. 13 illustrates apparatuses 1310 and 1320 according to various example embodiments. In the various example embodiments, apparatus 1310 may be an element in a network or associated with such a network, such as an ambient IoT device, H-EHD, and the like. H-EHDs 303/403 may be examples of apparatus 1310 according to various example embodiments as discussed above. It should be noted that one of ordinary skill in the art would understand that apparatus 1310 may include components or features not shown in FIG. 7. Further, the apparatus 1320 may be an element in a network or associated with such a network, such as a base station, gNB, and the like. Base station 301 and gNB 401 may be examples of apparatus 1320 according to various example embodiments as discussed above. It should be noted that one of ordinary skill in the art would understand that apparatus 1320 may include components or features not shown in FIG. 13.

According to various example embodiments, the apparatuses 1310 and/or 1320 may include one or more processors, one or more computer-readable storage medium (for example, memory, storage, or the like), one or more radio access components (for example, a modem, a transceiver, or the like), and/or a user interface. In some example embodiments, apparatuses 1310 and/or 1320 may be configured to operate using one or more radio access technologies, such as GSM, LTE, LTE-A, NR, 5G, WLAN, WiFi, NB-IoT, Bluetooth, NFC, MulteFire, and/or any other radio access technologies.

As illustrated in the example of FIG. 13, apparatuses 1310 and/or 1320 may include or be coupled to processors 1312 and 1322, respectively, for processing information and executing instructions or operations. Processors 1312 and 1322 may be any type of general or specific purpose processor. In fact, processors 1312 and 1322 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 1312 (1322) for each of apparatuses 1310 and/or 1320 is shown in FIG. 13, multiple processors may be utilized according to other example embodiments. For example, it should be understood that, in certain example embodiments, apparatuses 1310 and/or 1320 may include two or more processors that may form a multiprocessor system (for example, in this case processors 1312 and 1322 may represent a multiprocessor) that may support multiprocessing. According to certain example embodiments, the multiprocessor system may be tightly coupled or loosely coupled to, for example, form a computer cluster).

Processors 1312 and 1322 may perform functions associated with the operation of apparatuses 1310 and/or 1320, respectively, including, as some examples, precoding of antenna gain/phase parameters, encoding and decoding of individual bits forming a communication message, formatting of information, and overall control of the apparatuses 1310 and/or 1320, including processes illustrated in FIGs. 3-12.

Apparatuses 1310 and/or 1320 may further include or be coupled to memory 1314 and/or 1324 (internal or external), respectively, which may be coupled to processors 1312 and 1322, respectively, for storing information and instructions that may be executed by processors 1312 and 1322. Memory 1314 (memory 1324) may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 1314 (memory 1324) can be comprised of any combination of random access memory (RAM), read only memory (ROM), static storage such as a magnetic or optical disk, hard disk drive (HDD), or any other type of non-transitory machine or computer readable media. The instructions stored in memory 1314 and memory 1324 may include program instructions or computer program code that, when executed by processors 1312 and 1322, enable the apparatuses 1310 and/or 1320 to perform tasks as described herein.

In certain example embodiments, apparatuses 1310 and/or 1320 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processors 1312 and 1322 and/or apparatuses 1310 and/or 1320 to perform any of the methods illustrated in FIGs. 3-12.

In some example embodiments, apparatuses 1310 and/or 1320 may also include or be coupled to one or more antennas 1315 and 1325, respectively, for receiving a downlink signal and for transmitting via an uplink from apparatuses 1310 and/or 1320. Apparatuses 1310 and/or 1320 may further include transceivers 1316 and 1326, respectively, configured to transmit and receive information. The transceivers 1316 and 1326 may also include a radio interface (for example, a modem) respectively coupled to the antennas 1315 and 1325. The radio interface may correspond to a plurality of radio access technologies including one or more of GSM, LTE, LTE-A, 5G, NR, WLAN, NB-IoT, Bluetooth, BT-LE, NFC, RFID, UWB, or the like. The radio interface may include other components, such as filters, converters (for example, digital-to-analog converters or the like), symbol demappers, signal shaping components, an Inverse Fast Fourier Transform (IFFT) module, or the like, to process symbols, such as OFDMA symbols, carried by a downlink or an uplink.

For instance, transceivers 1316 and 1326 may be respectively configured to modulate information on to a carrier waveform for transmission by the antenna(s) 1315 and 1325, and demodulate information received via the antenna(s) 1315 and 1325 for further processing by other elements of apparatuses 1310 and/or 1320. In other example embodiments, transceivers 1316 and 1326 may be capable of transmitting and receiving signals or data directly. Additionally or alternatively, in some example embodiments, apparatuses 1310 and/or 1320 may include an input and/or output device (I/O device). In certain example embodiments, apparatuses 1310 and/or 1320 may further include a user interface, such as a graphical user interface or touchscreen.

In certain example embodiments, memory 1314 and memory 1324 store software modules that provide functionality when executed by processors 1312 and 1322, respectively. The modules may include, for example, an operating system that provides operating system functionality for apparatuses 1310 and/or 1320. The memory may also store one or more functional modules, such as an application or program, to provide additional functionality for apparatuses 1310 and/or 1320. The components of apparatuses 1310 and/or 1320 may be implemented in hardware, or as any suitable combination of hardware and software. According to certain example embodiments, apparatus 1310 may optionally be configured to communicate with apparatus 1320 via a wireless or wired communications link 1330 according to any radio access technology, such as NR.

According to certain example embodiments, processors 1312 and 1322, and memory 1314 and 1324 may be included in or may form a part of processing circuitry or control circuitry. In addition, in some example embodiments, transceivers 1316 and 1326 may be included in or may form a part of transceiving circuitry.

For instance, in certain example embodiments, the apparatus 1310 may be controlled by the memory 1314 and the processor 1312 to indicate to a network entity that the apparatus supports a first transmission mode and a second transmission mode. In the first transmission mode, transmitting data may include modulating the data on a backscattered signal, and in the second transmission mode, transmitting data may include actively generating and transmitting a signal on which the data is modulated. The apparatus 1310 may also be caused to configure at least one of a timer or an energy threshold for mode switching between the first transmission mode and the second transmission mode, operate in the first transmission mode as a default mode in which an activation signal is received from an intermediate node, and switch, upon a first switching condition being satisfied, from the first transmission mode to operate in the second transmission mode.

In various example embodiments, the apparatus 1320 may be controlled by the memory 1324 and the processor 1322 to receive, from an energy harvesting device, an indication that the energy harvesting device supports a first transmission mode and a second transmission mode. In the first transmission mode, transmitting data by the energy harvesting device may include modulating the data on a backscattered signal, and in the second transmission mode, transmitting data by the energy harvesting device may include actively generating and transmitting a signal on which the data is modulate. The apparatus 1320 may also be caused to configure an intermediate node to transmit an activation signal to the energy harvesting device in the first transmission mode as a default mode.

In some example embodiments, the apparatus 1310 may be controlled by the memory 1314 and the processor 1312 to indicate, to a network entity, that the apparatus 1310 supports a backscattering mode and an active transmission mode. In the backscattering mode, transmitting data may include modulating the data on a backscattered signal, and in the active transmission mode, transmitting data may include actively generating and transmitting a signal on which the data is modulated. The apparatus 1310 may also be caused to configure an energy threshold for mode switching between the backscattering mode and the active transmission mode and operate in the backscattering mode as a default mode in which an activation signal is received from an intermediate node. The apparatus 1310 may further be caused to receive a first switch signal from the network entity to switch from the backscattering mode to the active transmission mode, and switch, upon the received first switch signal, from the backscattering mode to operate in the active transmission mode.

In various example embodiments, the apparatus 1320 may be controlled by the memory 1324 and the processor 1322 to receive, from an energy harvesting device, an indication that the energy harvesting device supports a backscattering mode and an active transmission mode. In the backscattering mode, transmitting data by the energy harvesting device may include modulating the data on a backscattered signal, and in the active transmission mode, transmitting data by the energy harvesting device may include actively generating and transmitting a signal on which the data is modulated. The apparatus 1320 may also be caused to configure an intermediate node to transmit an activation signal to the energy harvesting device in the backscattering mode as a default mode and transmit a first switch signal to the energy harvesting device to switch from the backscattering mode to the active transmission mode.

In certain example embodiments, the apparatus 1310 may be controlled by the memory 1314 and the processor 1312 to indicate to a network entity that the apparatus 1310 supports a backscattering mode and an active transmission mode. In the backscattering mode, transmitting data may include modulating the data on a backscattered signal, and in the active transmission mode, transmitting data may include actively generating and transmitting a signal on which the data is modulated. The apparatus 1310 may also be caused to configure at least one of a timer or an energy threshold for mode switching between the backscattering mode and the active transmission mode and operate in the backscattering mode as a default mode in which an activation signal is received from an intermediate node. The apparatus 1310 may further be caused to switch, when the apparatus 1310 has not received the activation signal from the intermediate node for a time period associated with the configured timer, from the backscattering mode to operate in the active transmission mode.

In various example embodiments, the apparatus 1320 may be controlled by the memory 1324 and the processor 1322 to receive, from an energy harvesting device, an indication that the energy harvesting device supports a backscattering mode and an active transmission mode. In the backscattering mode, transmitting data by the energy harvesting device may include modulating the data on a backscattered signal, and in the active transmission mode, transmitting data by the energy harvesting device may include actively generating and transmitting a signal on which the data is modulated. The apparatus 1320 may be caused to configure an intermediate node to transmit an activation signal to the energy harvesting device in the backscattering mode as a default mode and receive an indication from the energy harvesting device that the energy harvesting device has switched from the backscattering mode to the active transmission mode.

In some example embodiments, an apparatus (e.g., apparatus 1310 and/or apparatus 1320) may include means for performing a method, a process, or any of the variants discussed herein. Examples of the means may include one or more processors, memory, controllers, transmitters, receivers, and/or computer program code for causing the performance of the operations.

As used herein, the term "circuitry" may refer to hardware-only circuitry implementations (for example, analog and/or digital circuitry), combinations of hardware circuits and software, combinations of analog and/or digital hardware circuits with software/firmware, any portions of hardware processor(s) with software, including digital signal processors, that work together to cause an apparatus (for example, apparatus 1310 and/or 1320) to perform various functions, and/or hardware circuit(s) and/or processor(s), or portions thereof, that use software for operation but where the software may not be present when it is not needed for operation. As a further example, as used herein, the term "circuitry" may also cover an implementation of merely a hardware circuit or processor or multiple processors, or portion of a hardware circuit or processor, and the accompanying software and/or firmware. The term circuitry may also cover, for example, a baseband integrated circuit in a server, cellular network node or device, or other computing or network device.

A computer program product may include one or more computer-executable components which, when the program is run, are configured to carry out some example embodiments. The one or more computer-executable components may be at least one software code or portions of it. Modifications and configurations required for implementing functionality of certain example embodiments may be performed as routine(s), which may be implemented as added or updated software routine(s). Software routine(s) may be downloaded into the apparatus.

As an example, software or a computer program code or portions of it may be in a source code form, object code form, or in some intermediate form, and it may be stored in some sort of carrier, distribution medium, or computer readable medium, which may be any entity or device capable of carrying the program. Such carriers may include a record medium, computer memory, read-only memory, photoelectrical and/or electrical carrier signal, telecommunications signal, and software distribution package, for example. Depending on the processing power needed, the computer program may be executed in a single electronic digital computer or it may be distributed amongst a number of computers. The computer readable medium or computer readable storage medium may be a non-transitory medium.

In other example embodiments, the functionality may be performed by hardware or circuitry included in an apparatus (for example, apparatuses 1310 and/or 1320), for example through the use of an application specific integrated circuit (ASIC), a programmable gate array (PGA), a field programmable gate array (FPGA), or any other combination of hardware and software. In yet another example embodiment, the functionality may be implemented as a signal, a non-tangible means that can be carried by an electromagnetic signal downloaded from the Internet or other network.

According to certain example embodiments, an apparatus, such as a node, device, or a corresponding component, may be configured as circuitry, a computer or a microprocessor, such as single-chip computer element, or as a chipset, including at least a memory for providing storage capacity used for arithmetic operation and an operation processor for executing the arithmetic operation.

The features, structures, or characteristics of example embodiments described throughout this specification may be combined in any suitable manner in one or more example embodiments. For example, the usage of the phrases "certain embodiments," "an example embodiment," "some embodiments," or other similar language, throughout this specification refers to the fact that a particular feature, structure, or characteristic described in connection with an embodiment may be included in at least one embodiment. Thus, appearances of the phrases "in certain embodiments," "an example embodiment," "in some embodiments," "in other embodiments," or other similar language, throughout this specification do not necessarily refer to the same group of embodiments, and the described features, structures, or characteristics may be combined in any suitable manner in one or more example embodiments. Further, the terms "cell", "node", "gNB", or other similar language throughout this specification may be used interchangeably.

As used herein, "at least one of the following: <a list of two or more elements>" and "at least one of <a list of two or more elements>" and similar wording, where the list of two or more elements are joined by "and" or "or," mean at least any one of the elements, or at least any two or more of the elements, or at least all the elements.

One having ordinary skill in the art will readily understand that the disclosure as discussed above may be practiced with procedures in a different order, and/or with hardware elements in configurations which are different than those which are disclosed. Therefore, although the disclosure has been described based upon these example embodiments, it would be apparent to those of skill in the art that certain modifications, variations, and alternative constructions would be apparent, while remaining within the spirit and scope of example embodiments. Although the above embodiments refer to 5G NR and LTE technology, the above embodiments may also apply to any other present or future 3GPP technology, such as LTE-advanced, and/or fourth generation (4G) and/or sixth (6G) technology.

### Partial Glossary:

- 3GPP: 3rd Generation Partnership Project
- 5G: 5th Generation
- 6G: 6^{th} Generation
- AF: Application Function
- AIoT: Ambient Internet of Things
- BS: Base Station
- EMBB: Enhanced Mobile Broadband
- gNB: 5G or Next Generation NodeB
- H-EHD: Hybrid Energy Harvesting Device
- ID: Identifier
- IoT: Internet of Things
- LTE: Long Term Evolution
- NR: New Radio
- NE: Network
- RF: Radio Frequency
- RFID: Radio Frequency Identification
- UE: User Equipment

Various example embodiments are set out below in the following numbered clauses:
1. An apparatus comprising:
   at least one processor; and
   at least one memory storing instructions that, when executed by the at least one processor, cause the apparatus at least to:
      indicate to a network entity that the apparatus supports a first transmission mode and a second transmission mode, wherein in the first transmission mode, transmitting data comprises modulating the data on a backscattered signal, and in the second transmission mode, transmitting data comprises actively generating and transmitting a signal on which the data is modulated;
      configure at least one of a timer or an energy threshold for mode switching between the first transmission mode and the second transmission mode;
      operate in the first transmission mode as a default mode in which an activation signal is received from an intermediate node; and
      switch, upon a first switching condition being satisfied, from the first transmission mode to operate in the second transmission mode.
2. The apparatus according to clause 1, wherein the instructions, when executed by the at least one processor, further cause the apparatus at least to:
   receive, from the network entity, a configuration comprising the at least one of the timer or the energy threshold.
3. The apparatus according to clause 1 or clause 2, wherein operating in the first transmission mode as the default mode is in response to a configuration received from the network entity configuring the first transmission mode as the default mode.
4. The apparatus according to any of clauses 1-3, wherein the instructions, when executed by the at least one processor, further cause the apparatus at least to:
   provide an indication to the network entity that the apparatus has switched from the first transmission mode to the second transmission mode.
5. The apparatus according to any of clauses 1-4, wherein the instructions, when executed by the at least one processor, further cause the apparatus at least to:
   transmit, to the network entity, an energy status of an energy storage level of the apparatus in response to receiving a query from the network entity during operating in the first transmission mode.
6. The apparatus according to any of clauses 1-5, wherein the instructions, when executed by the at least one processor, further cause the apparatus at least to:
   provide, during operating in the second transmission mode, an energy status of an energy storage level of the apparatus to the network entity.
7. The apparatus according to any of clauses 1-6, wherein the first switching condition is satisfied when a switch signal is received from the network entity instructing the apparatus to switch from the first transmission mode to the second transmission mode, or when the apparatus has not received the activation signal from the intermediate node for a time period associated with the configured timer.
8. The apparatus according to clause 7, wherein the first switching condition is satisfied when an amount of energy stored by the apparatus is above a first configured energy threshold.
9. The apparatus according to clause 7 or clause 8, wherein the instructions, when executed by the at least one processor, further cause the apparatus at least to:
   switch, upon a second switching condition being satisfied, from the second transmission mode to the first transmission mode.
10. The apparatus according to clause 9, wherein the instructions, when executed by the at least one processor, further cause the apparatus at least to:
   provide an indication to the network entity that the apparatus has switched from the second transmission mode to the first transmission mode.
11. The apparatus according to clause 9 or clause 10, wherein the second switching condition is satisfied when a second switch signal is received from the network entity instructing the apparatus to switch from the second transmission mode to the first transmission mode, or when a second timer expires, wherein the second timer indicates a time period in which the apparatus operates in the second transmission mode.
12. The apparatus according to clause 11, wherein the second timer is one of the configured timers or is received within the switch signal from the network entity instructing the apparatus to switch from the first transmission mode to the second transmission mode.
13. The apparatus according to clause 11 or clause 12, wherein the instructions, when executed by the at least one processor, further cause the apparatus at least to:
   receive, from the network entity, an update of the second timer.
14. The apparatus according to any of clauses 9-13, wherein the instructions, when executed by the at least one processor, further cause the apparatus at least to:
   receive, from the network entity, an indication that a second intermediate node has been configured for the apparatus, wherein the switching from the second transmission mode to the first transmission mode is based on the received indication.
15. The apparatus according to any of clauses 9-14, wherein the second switching condition is satisfied when an amount of energy stored by the apparatus is below a second configured energy threshold.
16. The apparatus according to clause 15, wherein the instructions, when executed by the at least one processor, further cause the apparatus at least to:
   when the amount of energy stored by the apparatus is below the second configured energy threshold, disregard any timer associated with the switching from the second transmission mode to the first transmission mode.
17. An apparatus comprising:
   at least one processor; and
   at least one memory storing instructions that, when executed by the at least one processor, cause the apparatus at least to:
      receive, from an energy harvesting device, an indication that the energy harvesting device supports a first transmission mode and a second transmission mode, wherein in the first transmission mode, transmitting data by the energy harvesting device comprises modulating the data on a backscattered signal, and in the second transmission mode, transmitting data by the energy harvesting device comprises actively generating and transmitting a signal on which the data is modulated; and
      configure an intermediate node to transmit an activation signal to the energy harvesting device in the first transmission mode as a default mode.
18. The apparatus according to clause 17, wherein the instructions, when executed by the at least one processor, further cause the apparatus at least to:
   transmit, to the energy harvesting device, a configuration comprising at least one of a timer or an energy threshold for mode switching between the first transmission mode and the second transmission mode.
19. The apparatus according to clause 17 or clause 18, wherein the instructions, when executed by the at least one processor, further cause the apparatus at least to:
   transmit a configuration to the energy harvesting device configuring the first transmission mode as the default mode.
20. The apparatus according to any of clauses 17-19, wherein the instructions, when executed by the at least one processor, further cause the apparatus at least to:
   receive, from the energy harvesting device operating in the second transmission mode, an energy status of an energy storage level of the energy harvesting device.
21. The apparatus according to any of clauses 17-20, wherein the instructions, when executed by the at least one processor, further cause the apparatus at least to:
   receive an indication from the energy harvesting device that the energy harvesting device has switched from the first transmission mode to the second transmission mode.
22. The apparatus according to any of clauses 17-21, wherein the instructions, when executed by the at least one processor, further cause the apparatus at least to:
   determine that the intermediate node is not available for transmitting the activation signal to the energy harvesting device; and
   search for another intermediate node to communicate with the energy harvesting device.
23. The apparatus according to clause 22, wherein the instructions, when executed by the at least one processor, further cause the apparatus at least to:
   transmit a result of the search to the energy harvesting device.
24. The apparatus according to clause 22 or clause 23, wherein the instructions, when executed by the at least one processor, further cause the apparatus at least to:
   in response to failing to obtain the other intermediate node, transmit, to the energy harvesting device operating in the first transmission mode, a query regarding an energy status of an energy storage level of the energy harvesting device; and
   receive the energy status of the energy storage level of the energy harvesting device.
25. The apparatus according to clause 24, wherein the failing to obtain the other intermediate node is determined based on a time period for searching for the other intermediate node.
26. The apparatus according to clause 24 or clause 25, wherein the instructions, when executed by the at least one processor, further cause the apparatus at least to:
   transmit a switch signal to the energy harvesting device to switch from the first transmission mode to the second transmission mode.
27. The apparatus according to clause 26, wherein the switch signal comprises a timer indicating a time period in which the energy harvesting device operates in the second transmission mode.
28. The apparatus according to clause 27, wherein the timer is determined or updated based on the received energy status of the energy storage level of the energy harvesting device.
29. The apparatus according to clause 28, wherein the instructions, when executed by the at least one processor, further cause the apparatus at least to:
   transmit the updated timer to the energy harvesting device.
30. The apparatus according to any of clauses 22-29, wherein the instructions, when executed by the at least one processor, further cause the apparatus at least to:
   when the energy harvesting device operates in the second transmission mode, transmit a second switch signal to the energy harvesting device to switch from the second transmission mode to the first transmission mode in response to obtaining the other intermediate node.
31. The apparatus according to any of clauses 17-30, wherein the instructions, when executed by the at least one processor, further cause the apparatus at least to:
   receive an indication from the energy harvesting device that the energy harvesting device has switched from the second transmission mode to the first transmission mode.

## Claims

1. An apparatus (202, 303, 403,1310) comprising:
at least one processor (1312); and
at least one memory (1314) storing instructions that, when executed by the at least one processor, cause the apparatus at least to:
indicate to a network entity that the apparatus supports a first transmission mode and a second transmission mode, wherein in the first transmission mode, transmitting data comprises modulating the data on a backscattered signal, and in the second transmission mode, transmitting data comprises actively generating and transmitting a signal on which the data is modulated;
configure at least one of a timer or an energy threshold for mode switching between the first transmission mode and the second transmission mode;
operate in the first transmission mode as a default mode in which an activation signal is received from an intermediate node; and
switch, upon a first switching condition being satisfied, from the first transmission mode to operate in the second transmission mode.

2. The apparatus according to claim 1, wherein the instructions, when executed by the at least one processor, further cause the apparatus at least to:
receive, from the network entity, a configuration comprising the at least one of the timer or the energy threshold.

3. The apparatus according to claim 1 or claim 2, wherein operating in the first transmission mode as the default mode is in response to a configuration received from the network entity configuring the first transmission mode as the default mode.

4. The apparatus according to any of claims 1-3, wherein the instructions, when executed by the at least one processor, further cause the apparatus at least to:
provide an indication to the network entity that the apparatus has switched from the first transmission mode to the second transmission mode.

5. The apparatus according to any of claims 1-4, wherein the instructions, when executed by the at least one processor, further cause the apparatus at least to perform at least one of:
transmit, to the network entity, an energy status of an energy storage level of the apparatus in response to receiving a query from the network entity during operating in the first transmission mode; or
provide, during operating in the second transmission mode, an energy status of an energy storage level of the apparatus to the network entity.

6. The apparatus according to any of claims 1-5, wherein the first switching condition is satisfied when at least one of:
when the apparatus has not received the activation signal from the intermediate node for a time period associated with the configured timer; or
an amount of energy stored by the apparatus is above a first configured energy threshold.

7. The apparatus according to claim 6, wherein the instructions, when executed by the at least one processor, further cause the apparatus at least to:
switch, upon a second switching condition being satisfied, from the second transmission mode to the first transmission mode; and
provide an indication to the network entity that the apparatus has switched from the second transmission mode to the first transmission mode.

8. The apparatus according to claim 7, wherein the second switching condition is satisfied in response to at least one of: when a second timer expires, wherein the second timer indicates a time period in which the apparatus operates in the second transmission mode; or when an amount of energy stored by the apparatus is below a second configured energy threshold.

9. The apparatus according to any of claims 7-8, wherein the instructions, when executed by the at least one processor, further cause the apparatus at least to:
receive, from the network entity, an indication that a second intermediate node has been configured for the apparatus, wherein the switching from the second transmission mode to the first transmission mode is based on the received indication.

10. An apparatus (201, 301, 401, 1320) comprising:
at least one processor (1322); and
at least one memory (1324) storing instructions that, when executed by the at least one processor, cause the apparatus at least to:
receive, from an energy harvesting device, an indication that the energy harvesting device supports a first transmission mode and a second transmission mode, wherein in the first transmission mode, transmitting data by the energy harvesting device comprises modulating the data on a backscattered signal, and in the second transmission mode, transmitting data by the energy harvesting device comprises actively generating and transmitting a signal on which the data is modulated; and
configure an intermediate node to transmit an activation signal to the energy harvesting device in the first transmission mode as a default mode.

11. The apparatus according to claim 10, wherein the instructions, when executed by the at least one processor, further cause the apparatus at least to:
transmit, to the energy harvesting device, a configuration comprising at least one of a timer or an energy threshold for mode switching between the first transmission mode and the second transmission mode.

12. The apparatus according to any of claims 10-11, wherein the instructions, when executed by the at least one processor, further cause the apparatus at least to:
determine that the intermediate node is not available for transmitting the activation signal to the energy harvesting device; and
search for another intermediate node to communicate with the energy harvesting device; and
transmit a result of the search to the energy harvesting device.

13. The apparatus according to claim 12, wherein the instructions, when executed by the at least one processor, further cause the apparatus at least to:
in response to failing to obtain the other intermediate node, transmit, to the energy harvesting device operating in the first transmission mode, a query regarding an energy status of an energy storage level of the energy harvesting device; and
receive the energy status of the energy storage level of the energy harvesting device.

14. The apparatus according to claim 13, wherein the instructions, when executed by the at least one processor, further cause the apparatus at least to:
transmit a switch signal to the energy harvesting device to switch from the first transmission mode to the second transmission mode, wherein the switch signal comprises a timer indicating a time period in which the energy harvesting device operates in the second transmission mode, wherein the timer is determined or updated based on the received energy status of the energy storage level of the energy harvesting device.

15. The apparatus according to any of claims 12-14, wherein the instructions, when executed by the at least one processor, further cause the apparatus at least to:
when the energy harvesting device operates in the second transmission mode, transmit a second switch signal to the energy harvesting device to switch from the second transmission mode to the first transmission mode in response to obtaining the other intermediate node.
